(19) Europäisches Patentamt / European Patent Office / Office européen des brevets

(11) **EP 4 480 933 B1**

(12) **EUROPEAN PATENT SPECIFICATION**

(45) Date of publication and mention
of the grant of the patent:
**01.04.2026 Bulletin 2026/14**

(21) Application number: **23180377.6**

(22) Date of filing: **20.06.2023**

(51) International Patent Classification (IPC):
**C04B 26/04** *(2006.01)*     **C04B 28/02** *(2006.01)*
**C04B 111/10** *(2006.01)*     **C04B 111/28** *(2006.01)*
**C04B 111/34** *(2006.01)*

(52) Cooperative Patent Classification (CPC):
(C-Sets available)
**C04B 26/04; C04B 28/02;** C04B 2111/00517;
C04B 2111/00612; C04B 2111/00629;
C04B 2111/10; C04B 2111/1062; C04B 2111/28;
C04B 2111/34                                (Cont.)

(54) **A WET READY MIX**

GEBRAUCHSFERTIGE NASSMISCHUNG

MÉLANGE PRÊT À L'EMPLOI HUMIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.12.2024 Bulletin 2024/52**

(73) Proprietor: **SAINT-GOBAIN PLACO
92400 Courbevoie (FR)**

(72) Inventors:
• **NIETO BARTOLOME, Pablo
92400 Courbevoie (FR)**

• **DOMINGUEZ MARTINEZ, Alejandro
92400 Courbevoie (FR)**
• **PARDO COBO, Fernando
92400 Courbevoie (FR)**

(74) Representative: **Murgitroyd & Company
165-169 Scotland Street
Glasgow G5 8PL (GB)**

(56) References cited:
EP-A2- 0 508 751          WO-A1-2011/110646
WO-A2-02/053510          WO-A2-03/060018
CN-A- 110 357 525        CN-A- 112 726 987
DE-A1- 4 212 842          US-A1- 2021 230 066
US-A1- 2021 317 040

(52) Cooperative Patent Classification (CPC): (Cont.)

C-Sets
**C04B 26/04, C04B 14/18, C04B 14/26, C04B 14/28, C04B 14/4618, C04B 14/4643, C04B 40/0625;**

**C04B 28/02, C04B 14/18, C04B 14/26, C04B 14/28, C04B 14/4618, C04B 14/4643, C04B 20/0064, C04B 2103/67;**
**C04B 28/02, C04B 14/18, C04B 14/26, C04B 14/28, C04B 14/4618, C04B 14/4643, C04B 40/0625**

## Description

### FIELD OF THE INVENTION

The present invention relates to a wet ready mix, and more specifically a wet ready mix comprising stone wool objects.

### BACKGROUND TO THE INVENTION

Due their versatility, desirable mechanical properties and the possibility of achieving a high level of finish, products formed from wet ready mixes are commonly found throughout inhabited buildings. As such, the fire performance of these products is of great significance and concern.

To ensure adequate fire resistance, it is essential that the products formed from wet ready mixes do not crack or split during a fire event. Additionally, low levels of shrinkage are desired. Where these criteria are not met, the product can spall away from an underlying surface, potentially exposing structural elements such as girders to the direct heat of a fire potentially resulting in structural failure.

Again, many techniques have been used to improve the mechanical properties of products formed from wet ready mixes in a fire event. However, current approaches are not without cost and environmental impact.

CN 122 726 987 A relates to a lower anchoring type building heat preservation and decorating integrated plate.

### SUMMARY OF THE INVENTION

According to a first aspect of the invention, there is provided a wet ready mix as claimed in Claim 1.

Such wet ready mixes form dry products that demonstrate an improved fire performance with lower shrinkage and cracking when exposed to high temperatures compared to the state of the art. Additionally, where applicable, the re-use of waste stone wool reduces the environmental impact and the need for any expense in disposing of such waste by-product. In addition, such wet ready mixes can be manufactured with a reduced cost and environmental impact.

It is understood that fibres, crossed fibres and particles are all examples of objects. The object length is defined as the maximum Feret diameter. The object diameter is the minimum Feret diameter. Fibres are objects with a diameter smaller than 0.3 times the object length and a straightness coefficient (S) equal to or greater than 0.9. Crossed fibres are objects with a diameter smaller than 0.3 times the object length and a straightness coefficient (S) less than 0.9. Crossed fibres include clusters of fibres that cross over one another, as well as very curved fibres, in particular very curved fibres with a small diameter.

The straightness coefficient (S) is a measure of how straight an object is. To calculate the straightness coefficient, the maximum dimension of the object as observed is measured (the maximum Feret diameter) and this value divided by the value of the longest measured path along the object. As such, the straightness coefficient is calculated via:

$$S = \frac{F}{L}$$

where F is the maximum Feret diameter and L is the longest measured path along the object.

A particle is an object with a diameter equal to or greater than 0.3 times the object length.

Spherical particles are a subset of particles. A spherical particle is a particle with a circularity (C) equal to or greater than 0.9. Non spherical particles are also a subset of particles. A non-spherical particle is a particle with a circularity (C) less than 0.9.

The circularity is the degree to which the particle is similar to a circle, taking into consideration the smoothness of the perimeter. Circularity (C) is calculated using the formula:

$$C = \sqrt{\frac{4\pi A}{P^2}}$$

where P is the perimeter and A is the area of the particle as observed in 2D imaging such as via a microscope.

The wet ready mix comprises the binder in an amount of 7 to 12 wt.% relative to the total weight of the wet ready mix.

The wet ready mix comprises the water in an amount of 25 to 40 wt.% relative to the total weight of the wet ready mix.

The wet ready mix comprises the mineral filler in an amount of 35 to 75 wt.% relative to the total weight of the wet ready mix. More preferably, the wet ready mix comprises the mineral filler in an amount of 35 to 55 wt.% relative to the total weight of the wet ready mix. Preferably, the mineral filler comprises $CaCO_3$ and/or $CaMg(CO_3)_2$. $CaMg(CO_3)_2$ is referred to herein as dolomite. Preferably, the dolomite comprises white dolomite. Preferably, the dolomite comprises dolomite microspheres. Preferably, the wet ready mix comprises perlite. Preferably, the wet ready mix comprises perlite in an amount of 2 to 5 wt.% relative to the total weight of the wet ready mix.

The mineral filler may additionally comprise one or more of $SiO_2$, $Al_2O_3$, $CaO$, $K_2O_5$, $Na_2O_3$, $MgCO_3$, $Al(OH)_3$, and $Mg(OH)_2$. Preferably, where the mineral filler comprises $CaCO_3$, the major component of the mineral filler is $CaCO_3$. Preferably, where the mineral filler comprises $CaMg(CO_3)_2$, the major component of the mineral filler is $CaMg(CO_3)_2$. Where the mineral filler comprises $CaCO_3$ and/or $CaMg(CO_3)_2$ or dolomite, it may additionally comprise one or more of $SiO_2$, $Al_2O_3$, $CaO$, $K_2O_5$, $Na_2O_3$, $MgCO_3$, $Al(OH)_3$, and $Mg(OH)_2$.

Preferably, the binder comprises a copolymer dispersion. More preferably, the binder comprises a copolymer of vinyl acetate and vinyl neodecanoate. Preferably, the wet ready mix comprises a biocide. Preferably, the biocide comprises benzisothiazolinone, chloroisothiazolinones, and/or methylisothiazolinones. Preferably, the wet ready mix comprises benzisothiazolinone in an amount of up to 0.05 wt.% relative to the total weight of the wet ready mix. Preferably, the wet ready mix comprises chloroisothiazolinones, and/or methylisothiazolinones in an amount of up to 0.0015 wt.% relative to the total weight of the wet ready mix.

Preferably, the wet ready mix is substantially halogen free. Preferably, the wet ready mix is free of vermiculite. Preferably, the wet ready mix is free of hydromagnesite.

A stone wool object is an object wherein the total amount of $Na_2O$, $K_2O$, $CaO$, $MgO$ and, $BaO$ is greater than or equal to 18 wt.%.

Preferably, the stone wool objects comprise at least one of silicon dioxide, aluminium oxide and magnesium oxide. Preferably, the stone wool objects comprise at least one of silicon dioxide and aluminium oxide. More preferably, the stone wool objects comprise silicon dioxide and aluminium oxide, wherein the stone wool objects comprise more silicon dioxide than aluminium oxide by weight.

Preferably, the stone wool particles comprise at least one of silicon dioxide, aluminium oxide and magnesium oxide. Preferably, the stone wool particles comprise at least one of silicon dioxide and aluminium oxide. More preferably, the stone wool particles comprise silicon dioxide and aluminium oxide, wherein the stone wool particles comprise more silicon dioxide than aluminium oxide by weight.

Preferably, the stone wool fibres comprise at least one of silicon dioxide, aluminium oxide and magnesium oxide. Preferably, the stone wool fibres comprise at least one of silicon dioxide and aluminium oxide. More preferably, the stone wool fibres comprise silicon dioxide and aluminium oxide, wherein the stone wool fibres comprise more silicon dioxide than aluminium oxide by weight. Preferably, the stone wool crossed fibres comprise at least one of silicon dioxide and aluminium oxide. More preferably, the stone wool crossed fibres comprise silicon dioxide and aluminium oxide, wherein the stone wool crossed fibres comprise more silicon dioxide than aluminium oxide by weight. Preferably, the stone wool particles, the stone wool crossed fibres and the stone wool fibres have substantially the same composition.

Preferably, the stone wool objects are present in an amount of at least 0.2 wt.% relative to the wet ready mix. Preferably, the stone wool objects are present in an amount of up to 5 wt.% relative to the wet ready mix, more preferably in an amount of up to 4 wt.% relative to the wet ready mix.

Preferably, the stone wool particles are present in an amount of at least 0.2 wt.% relative to the wet ready mix. Preferably, the stone wool particles are present in an amount of up to 5 wt.% relative to the wet ready mix, more preferably in an amount of up to 4 wt.% relative to the wet ready mix.

Preferably, the stone wool fibres are present in an amount of at least 0.2 wt.% relative to the wet ready mix. Preferably, the stone wool fibres are present in an amount of up to 5 wt.% relative to the wet ready mix, more preferably in an amount of up to 4 wt.% relative to the wet ready mix.

Preferably, at least 0.8% by number of the stone wool fibres have a longest dimension greater than $250\mu m$. More preferably, at least 2% by number of the stone wool fibres have a longest dimension greater than $250\mu m$. Still more preferably, at least 2.5% by number of the stone wool fibres have a longest dimension greater than $250\mu m$.

Preferably, at least 2% by number of the stone wool fibres have a longest dimension greater than $200\mu m$. More preferably, at least 4% by number of the stone wool fibres have a longest dimension greater than $200\mu m$. Still more preferably, at least 5% by number of the stone wool fibres have a longest dimension greater than $200\mu m$.

Preferably, at least 4% by number of the stone wool fibres have a longest dimension greater than $150\mu m$. More preferably, at least 9% by number of the stone wool fibres have a longest dimension greater than $150\mu m$. Still more preferably, at least 11% by number of the stone wool fibres have a longest dimension greater than $150\mu m$.

Preferably, the stone wool objects comprise spherical particles in an amount from 10% to 85% by number. More preferably, at least 15% by number of the stone wool objects are spherical particles. Still more preferably, at least 20% by number of the stone wool objects are spherical particles. Yet more preferably, at least 60% by number of the stone wool objects are spherical particles.

Preferably, at least 45% by number of the stone wool particles are spherical particles. More preferably, at least 50% by number of the stone wool particles are spherical particles. Still more preferably, at least 70% by number of the stone wool particles are spherical particles.

Preferably, the stone wool objects comprise fibres in an amount from 4% to 40% by number. More preferably, at least 5% by number of the stone wool objects are fibres. Still more preferably, at least 20% by number of the stone wool objects are fibres. Yet more preferably, at least 30% by number of the stone wool objects are fibres.

Preferably, the stone wool objects comprise crossed fibres in an amount from 3% to 20% by number. More preferably, at least 5% by number of the stone wool objects are crossed fibres. Still more preferably, at least 15% by number of the stone wool objects are crossed fibres.

Preferably, the stone wool objects comprise non-spherical particles in an amount from 5% to 20% by number. More preferably, at least 6% by number of said stone wool objects are non-spherical particles. Still more preferably, at least 15% by number of said stone wool objects are non-spherical particles.

Preferably, particles (comprising spherical and non-spherical particles) comprise from 40% to 90% by number of the waste stone wool objects.

Preferably, in total, fibres and crossed fibres comprise from 10% to 60% by number of the waste stone wool objects.

Preferably, at least 7% by number of the stone wool particles are non-spherical particles. More preferably, at least 27% by number of the stone wool particles are non-spherical particles. Still more preferably, at least 34% by number of the stone wool particles are non-spherical particles.

Preferably, the stone wool fibres have a mean fibre diameter of 6 $\mu$m or greater. More preferably, the stone wool fibres have a mean fibre diameter of 7 $\mu$m or greater. Still more preferably, the stone wool fibres have a mean fibre diameter of 8 $\mu$m or greater.

Preferably, the waste stone wool comprises binder in an amount of 0 to 6% by weight of the dry binder to the waste stone wool material weight. More preferably, the waste stone wool comprises binder in an amount of 1 to 6% by weight of the dry binder to the waste stone wool material weight. Still more preferably, the waste stone wool comprises binder in an amount of 2 to 5% by weight of the dry binder to the waste stone wool material weight. Preferably, the binder is organic.

According to a second aspect of the invention, there is provided a cementitious product as claimed in Claim 12.

Such cementitious products demonstrate an improved fire performance with lower shrinkage and cracking when exposed to high temperatures compared to the state of the art. Additionally, where applicable, the re-use of waste stone wool reduces the environmental impact and the need for any expense in disposing of such waste by-product. In addition, such cementitious products can be manufactured with a reduced cost and environmental impact.

Preferably, the stone wool objects are present in an amount of at least 0.2 wt.% relative to the wet ready mix. Preferably, the stone wool objects are present in an amount of up to 5 wt.% relative to the wet ready mix, more preferably in an amount of up to 4 wt.% relative to the wet ready mix.

Preferably, the stone wool particles are present in an amount of at least 0.2 wt.% relative to the wet ready mix. Preferably, the stone wool particles are present in an amount of up to 5 wt.% relative to the wet ready mix, more preferably in an amount of up to 4 wt.% relative to the wet ready mix.

Preferably, the stone wool fibres are present in an amount of at least 0.2 wt.% relative to the wet ready mix. Preferably, the stone wool objects are present in an amount of up to 5 wt.% relative to the wet ready mix, more preferably in an amount of up to 4 wt.% relative to the wet ready mix.

The wet ready mix comprises the binder in an amount of 7 to 12 wt.% relative to the total weight of the wet ready mix.

The wet ready mix comprises the water in an amount of 25 to 40 wt.% relative to the total weight of the wet ready mix.

The wet ready mix comprises the mineral filler in an amount of 35 to 75 wt.% relative to the total weight of the wet ready mix. More preferably, the wet ready mix comprises the mineral filler in an amount of 35 to 55 wt.% relative to the total weight of the wet ready mix. Preferably, the mineral filler comprises $CaCO_3$ and/or $CaMg(CO_3)_2$. $CaMg(CO_3)_2$ is referred to herein as dolomite. Preferably, the dolomite comprises white dolomite. Preferably, the dolomite comprises dolomite microspheres. Preferably, the wet ready mix comprises perlite. Preferably, the wet ready mix comprises perlite in an amount of 2 to 5 wt.% relative to the total weight of the wet ready mix.

The mineral filler may additionally comprise one or more of $SiO_2$, $Al_2O_3$, $CaO$, $K_2O_5$, $Na_2O_3$, $MgCO_3$, $Al(OH)_3$, and $Mg(OH)_2$. Preferably, where the mineral filler comprises $CaCO_3$, the major component of the mineral filler is $CaCO_3$. Preferably, where the mineral filler comprises $CaMg(CO_3)_2$, the major component of the mineral filler is $CaMg(CO_3)_2$. Where the mineral filler comprises $CaCO_3$ and/or $CaMg(CO_3)_2$ or dolomite, it may additionally comprise one or more of $SiO_2$, $Al_2O_3$, $CaO$, $K_2O_5$, $Na_2O_3$, $MgCO_3$, $Al(OH)_3$, and $Mg(OH)_2$.

Preferably, the binder comprises a copolymer dispersion. More preferably, the binder comprises a copolymer of vinyl acetate and vinyl neodecanoate. Preferably, the wet ready mix comprises a biocide. Preferably, the biocide comprises benzisothiazolinone, chloroisothiazolinones, and/or methylisothiazolinones. Preferably, the wet ready mix comprises benzisothiazolinone in an amount of up to 0.05 wt.% relative to the total weight of the wet ready mix. Preferably, the wet ready mix comprises chloroisothiazolinones, and/or methylisothiazolinones in an amount of up to 0.0015 wt.% relative to the total weight of the wet ready mix.

Preferably, the wet ready mix is substantially halogen free. Preferably, the wet ready mix is free of vermiculite. Preferably, the wet ready mix is free of hydromagnesite.

A stone wool object is an object wherein the total amount of $Na_2O$, $K_2O$, CaO, MgO and, BaO is greater than or equal to 18 wt.%.

Preferably, the stone wool objects comprise at least one of silicon dioxide, aluminium oxide and magnesium oxide. Preferably, the stone wool objects comprise at least one of silicon dioxide and aluminium oxide. More preferably, the stone wool objects comprise silicon dioxide and aluminium oxide, wherein the stone wool objects comprise more silicon dioxide than aluminium oxide by weight.

Preferably, the stone wool particles comprise at least one of silicon dioxide, aluminium oxide and magnesium oxide. Preferably, the stone wool particles comprise at least one of silicon dioxide and aluminium oxide. More preferably, the stone wool particles comprise silicon dioxide and aluminium oxide, wherein the stone wool particles comprise more silicon dioxide than aluminium oxide by weight.

Preferably, the stone wool fibres comprise at least one of silicon dioxide, aluminium oxide and magnesium oxide. Preferably, the stone wool fibres comprise at least one of silicon dioxide and aluminium oxide. More preferably, the stone wool fibres comprise silicon dioxide and aluminium oxide, wherein the stone wool fibres comprise more silicon dioxide than aluminium oxide by weight. Preferably, the stone wool crossed fibres comprise at least one of silicon dioxide and aluminium oxide. More preferably, the stone wool crossed fibres comprise silicon dioxide and aluminium oxide, wherein the stone wool crossed fibres comprise more silicon dioxide than aluminium oxide by weight. Preferably, the stone wool particles, the stone wool crossed fibres and the stone wool fibres have substantially the same composition.

Preferably, the stone wool objects are present in an amount of at least 0.2 wt.% relative to the wet ready mix. Preferably, the stone wool objects are present in an amount of up to 5 wt.% relative to the wet ready mix, more preferably in an amount of up to 4 wt.% relative to the wet ready mix.

Preferably, the stone wool particles are present in an amount of at least 0.2 wt.% relative to the wet ready mix. Preferably, the stone wool particles are present in an amount of up to 5 wt.% relative to the wet ready mix, more preferably in an amount of up to 4 wt.% relative to the wet ready mix.

Preferably, the stone wool fibres are present in an amount of at least 0.2 wt.% relative to the wet ready mix. Preferably, the stone wool fibres are present in an amount of up to 5 wt.% relative to the wet ready mix, more preferably in an amount of up to 4 wt.% relative to the wet ready mix.

Preferably, at least 0.8% by number of the stone wool fibres have a longest dimension greater than $250\mu m$. More preferably, at least 2% by number of the stone wool fibres have a longest dimension greater than $250\mu m$. Still more preferably, at least 2.5% by number of the stone wool fibres have a longest dimension greater than $250\mu m$.

Preferably, at least 2% by number of the stone wool fibres have a longest dimension greater than $200\mu m$. More preferably, at least 4% by number of the stone wool fibres have a longest dimension greater than $200\mu m$. Still more preferably, at least 5% by number of the stone wool fibres have a longest dimension greater than $200\mu m$.

Preferably, at least 4% by number of the stone wool fibres have a longest dimension greater than $150\mu m$. More preferably, at least 9% by number of the stone wool fibres have a longest dimension greater than $150\mu m$. Still more preferably, at least 11% by number of the stone wool fibres have a longest dimension greater than $150\mu m$.

Preferably, the stone wool objects comprise spherical particles in an amount from 10% to 85% by number. More preferably, at least 15% by number of the stone wool objects are spherical particles. Still more preferably, at least 20% by number of the stone wool objects are spherical particles. Yet more preferably, at least 60% by number of the stone wool objects are spherical particles.

Preferably, at least 45% by number of the stone wool particles are spherical particles. More preferably, at least 50% by number of the stone wool particles are spherical particles. Still more preferably, at least 70% by number of the stone wool particles are spherical particles.

Preferably, the stone wool objects comprise fibres in an amount from 4% to 40% by number. More preferably, at least 5% by number of the stone wool objects are fibres.

Still more preferably, at least 20% by number of the stone wool objects are fibres. Yet more preferably, at least 30% by number of the stone wool objects are fibres.

Preferably, the stone wool objects comprise crossed fibres in an amount from 3% to 20% by number. More preferably, at least 5% by number of the stone wool objects are crossed fibres. Still more preferably, at least 15% by number of the stone wool objects are crossed fibres.

Preferably, the stone wool objects comprise non-spherical particles in an amount from 5% to 20% by number. More preferably, at least 6% by number of said stone wool objects are non-spherical particles. Still more preferably, at least 15% by number of said stone wool objects are non-spherical particles.

Preferably, particles (comprising spherical and non-spherical particles) comprise from 40% to 90% by number of the waste stone wool objects.

Preferably, in total, fibres and crossed fibres comprise from 10% to 60% by number of the waste stone wool objects.

Preferably, at least 7% by number of the stone wool particles are non-spherical particles. More preferably, at least 27% by number of the stone wool particles are non-spherical particles. Still more preferably, at least 34% by number of the stone wool particles are non-spherical particles.

Preferably, the stone wool fibres have a mean fibre diameter of 6 $\mu$m or greater. More preferably, the stone wool fibres have a mean fibre diameter of 7 $\mu$m or greater. Still more preferably, the stone wool fibres have a mean fibre diameter of 8 $\mu$m or greater.

Preferably, the waste stone wool comprises binder in an amount of 0 to 6% by weight of the dry binder to the waste stone wool material weight. More preferably, the waste stone wool comprises binder in an amount of 1 to 6% by weight of the dry binder to the waste stone wool material weight. Still more preferably, the waste stone wool comprises binder in an amount of 2 to 5% by weight of the dry binder to the waste stone wool material weight. Preferably, the binder is organic.

Preferably, the coating layer has a thickness of at least 1 mm. Preferably, the coating layer has a thickness of up to 4 mm. More preferably, the coating layer has a thickness of up to 3 mm.

The cementitious product comprises cementitious material. Preferably, the cementitious material comprises at least one of calcium sulphate hemihydrate and calcium sulphate dihydrate. More preferably, the cementitious material is a powder, and the cementitious material comprises calcium sulphate hemihydrate. Preferably, the cementitious product is a plaster or a plasterboard, and the cementitious material comprises calcium sulphate dihydrate. In preferred embodiments, the cementitious material comprises gypsum.

Preferably, the cementitious material comprises stone wool objects. Preferably, the stone wool objects are present in an amount of at least 4 wt.% relative to the cementitious material. More preferably, the stone wool objects are present in an amount of at least 5 wt.% relative to the cementitious material. Still more preferably, the stone wool objects are present in an amount of at least 10 wt.% relative to the cementitious material.

Preferably, the cementitious material comprises stone wool particles. Preferably, the stone wool particles are present in an amount of at least 4 wt.% relative to the cementitious material. More preferably, the stone wool particles are present in an amount of at least 5 wt.% relative to the cementitious material. Still more preferably, the stone wool particles are present in an amount of at least 10 wt.% relative to the cementitious material.

Preferably, the cementitious material comprises stone wool fibres. Preferably, the stone wool fibres are present in an amount of at least 4 wt.% relative to the cementitious material. More preferably, the stone wool fibres are present in an amount of at least 5 wt.% relative to the cementitious material. Preferably, the stone wool crossed fibres are present in an amount of at least 4 wt.% relative to the cementitious material.

Preferably, the cementitious product is free of vermiculite. Preferably, the cementitious product is free of hydromagnesite.

Preferably, the cementitious product comprises a water gauge of between 55 wt.% and 78 wt.% of the total composition.

Preferably, the density of the cementitious product is at least 525 kg/m$^3$ or greater. More preferably, the density of the cementitious product is at least 730 kg/m$^3$ or greater.

Preferably, the coverage of the cementitious product is at least 4.5 kg/m$^2$.cm or greater. More preferably, the coverage of the cementitious product is at least 6 kg/m$^2$.cm or greater.

Preferably, the flexion of the cementitious product is at least 1 mm or greater. Preferably, the final hardness of the cementitious product is at least 950 m/s or greater.

## DETAILED DESCRIPTION

Embodiments of the present invention will now be described by way of example only and with reference to the accompanying figures, in which:

Figures 1 and 2 depict examples of traditional boards not according to the present invention after undergoing fire event testing;

Figure 3 depicts an example of a traditional board with a coating layer in accordance with the present invention after undergoing fire event testing;

Figures 4 and 5 depict examples of fire resistant boards not according to the present invention after undergoing fire event testing; and

Figure 6 depicts an example of a traditional board with a coating layer in accordance with the present invention after undergoing fire event testing.

**STONE WOOL**

In the experiments described herein, the stone wool used was obtained as a residue of cutting stone wool products the products being typically produced from fibres obtained from molten rock by high speed spinning on centrifuging wheels, and glued together by a small quantity of binding agent.

The cutting residue, hereinafter waste, may be generated at products manufacturing or during a subsequent step of transforming the products to shape and size. However, other sources of stone wool, and more specifically waste stone wool are envisaged.

After its initial generation, the stone wool used in the experiments herein was not milled, ground or crushed before use. In other words, the waste stone wool used herein is the unmodified waste product of the processes described below. As such, the particle size of the stone wool was not reduced before its incorporation into the cementitious products described later. Examples of the stone wool products are detailed below in Table 1.

**TABLE 1**

| | Mean Diameter ($\mu$m) | Standard Deviation ($\mu$m) | Fibres Longer than 250 $\mu$m (% of fibres by number) | Fibres Longer than 200 $\mu$m (% of fibres by number) | Fibres Longer than 150 $\mu$m (% of fibres by number) |
|---|---|---|---|---|---|
| Stone Wool Example 1 | 8.86 | 3.20 | 0.8 | 2.1 | 4.4 |
| Stone Wool Example 2 | 7.16 | 3.09 | 2.2 | 4.7 | 9.3 |
| Stone Wool Example 3 | 6.99 | 3.22 | 2.6 | 5.1 | 11.1 |

The stone wool objects used herein originate from a stone wool sandwich panel production process. This production process comprises cutting stages, such as the cutting of lamella with a cutting disk, which generate the waste stone wool objects.

The waste stone wool of Stone Wool Example 1 was obtained as the by-product of a cutting process, more specifically the waste product from a lamella cut with a cutting disk. The waste stone wool of Stone Wool Example 2 was obtained as the by-product of a milling process, more specifically the waste product from milling surface edges of a stone wool product. The waste stone wool of Stone Wool Example 3 was a mixture of the by-product of a cutting process, more specifically the waste product from a lamella cut with a cutting disk and the by-product of a milling process, more specifically the waste product from milling surface edges of a stone wool product.

Further, the morphology of the stone wool objects within each Stone Wool Example are detailed in Table 2.

**TABLE 2**

| Object Morphology | Stone Wool Example 1 (% of objects by number) | Stone Wool Example 2 (% of objects by number) | Stone Wool Example 3 (% of objects by number) |
|---|---|---|---|
| Fibres | 6 | 34 | 26 |
| Crossed fibres | 5 | 16 | 15 |
| Spherical particles | 82 | 33 | 43 |
| Non-spherical particles | 7 | 17 | 16 |

To study the object morphology, the objects were dispersed under compressed air on the glass support for analysis using a microscope at x5 and x20 magnifications. The dimensions of objects over an area of 24.5 mm by 24.5 mm were analysed.

Fibres larger than 5 $\mu$m in diameter were measured using x5 magnification images and finer fibres were measured using x20 magnification images, with a minimum detection diameter of 0.5 $\mu$m.

Crossed fibres larger than 5 $\mu$m in diameter were measured using x5 magnification images and finer crossed fibres were measured using x20 magnification images, with a minimum detection diameter of 0.5 $\mu$m.

## CEMENTITIOUS COMPOSITIONS

To allow the efficacy of the claimed invention to be investigated, cementitious compositions were prepared using conventional techniques. Whilst the cementitious composition presented herein comprises calcium sulphate as the major component, alternative cementitious compositions such as hydraulic cements are also considered to be within the scope of the invention.

A traditional plasterboard was used for Comparative Example 1, Comparative Example 2 and Example 1. The traditional plasterboard used was the Gyproc GEE 13 ErgoLite board. The board consisted of a fiberglass-reinforced gypsum core with air pores, surrounded by high-density gypsum, with a surface layer of cardboard. The samples used had a size of 280x280 mm and a thickness of 12.5 +/-0.3 mm.

A fire resistant plasterboard was used for Comparative Example 3, Comparative Example 4 and Example 2. The fire resistant plasterboard used was the Gyproc Protect F fireboard. The board consisted of a core of glass fiber reinforced plaster with additive of dimensionally stabilizing minerals and a surface layer of cardboard. The samples used had a size of 280x280 mm and a thickness of 15.4 +/-0.4 mm.

Comparative Examples 1 and 3 were used as reference examples of each of the plasterboards without an additional coating. A coating layer formed from a wet ready mix of the present invention was applied to the traditional and fire resistant plasterboards to form Example 1 and Example 2. A coating not of the present invention was applied to the traditional and fire resistant plasterboards to form Comparative Examples 2 and 4. The coatings were applied to give a coating layer with a thickness of 3 mm. After application of the coatings, the samples were dried at room temperature for two weeks.

Table 3, included below, details the composition of the wet ready mixes used to form the coating layers of Example 1 and Comparative Example 2 as used in the experiments present herein. The stone wool used in Example 1 and Example 2 was Stone Wool Example 3.

### TABLE 3

| | WET READY MIX COMPOSITION (wt.% of the total wet ready mix) | | | |
| | Example 1 | Comparative Example 2 | Example 2 | Comparative Example 4 |
|---|---|---|---|---|
| Dolomite | 40 | 40 | 40 | 40 |
| Water | 38 | 38 | 38 | 38 |
| Stone Wool | 0.23 | 0 | 0.23 | 0 |
| Binder | 7 | 7 | 7 | 7 |
| Additives | To balance | To balance | To balance | To balance |

## FIRE TESTS

To demonstrate good fire performance, the samples must show both good insulation performance and good resistance to cracking and shrinkage in a fire. Cementitious compositions can suffer from cracking and breaking when subjected to fire and high temperatures. The experiments below evaluate this.

## INSULATION PERFORMANCE

Insulation tests were carried out on samples of each of Example 1-2 and Comparative Examples 1-4.

The samples were applied to 280x280x5mmm steel plates and heated until the back of the steel plates reached a temperature of 200°C. The time taken for the back of the plates to reach 200°C was recorded. The tests were carried out in accordance with EN 1363-1 and ETK ISO 834. The results are set out in Table 4 below.

### TABLE 4

| Sample | Time taken to reach 200°C (minutes) |
|---|---|
| Comparative Example 1 | 20 |
| Comparative Example 2 | 49 |
| Example 1 | 47 |
| Comparative Example 3 | 23 |

(continued)

| Sample | Time taken to reach 200°C (minutes) |
|---|---|
| Comparative Example 4 | 57 |
| Example 2 | 59 |

The samples with a coating layer, Comparative Example 2, Example 1, Comparative Example 4, and Example 4, gave longer times and therefore show higher fire resistance than the samples without a coating layer. When used with a fire resistant plasterboard, the coating layer of the present invention provided an increase in the time taken to reach 200°C and therefore an increase in the fire resistance as shown by Comparative Example 3, Comparative Example 4, and Example 2.

**CRACKING RESISTANCE**

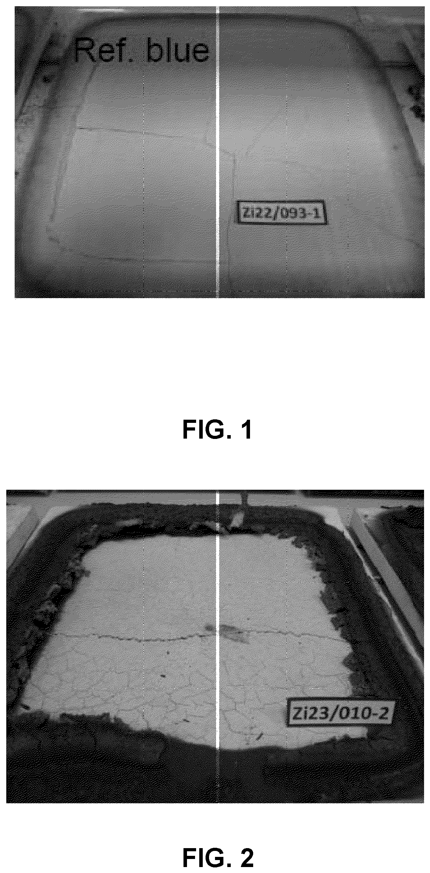

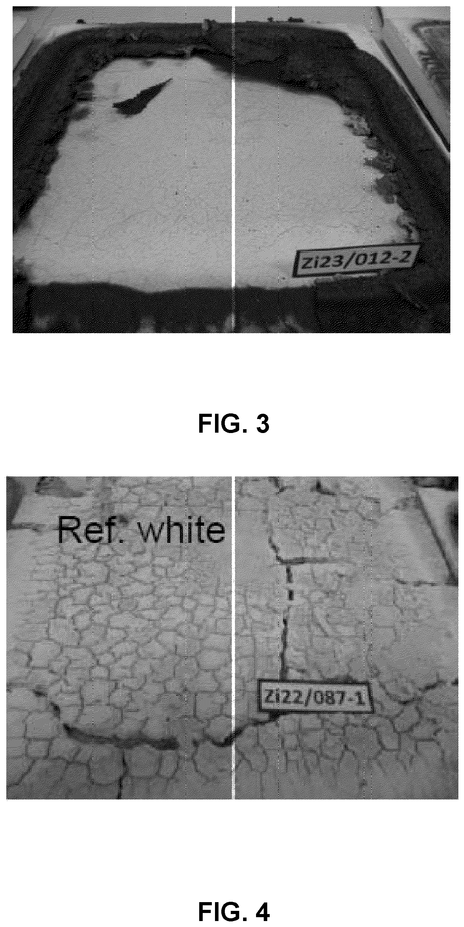

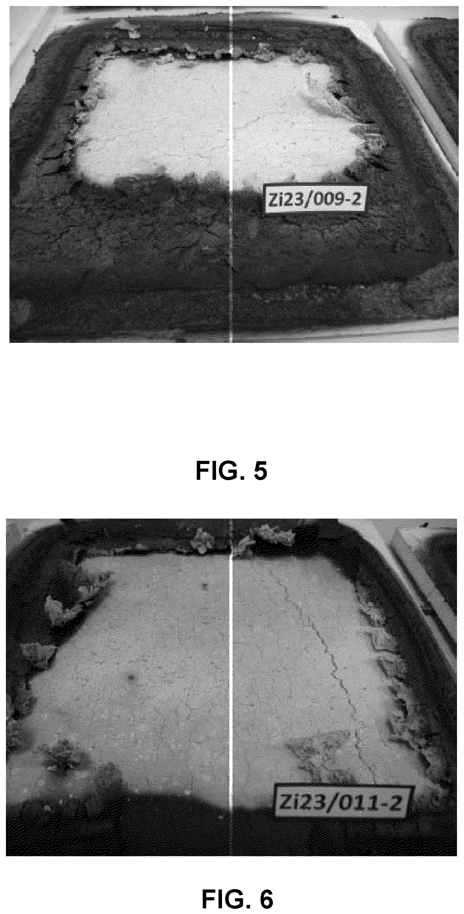

The cracking and shrinkage of each sample was assessed visually. Figure 1 shows a sample of Comparative Example 1 after fire testing. Figure 2 shows a sample of Comparative Example 2 after fire testing. Figure 3 shows a sample of Example 1 after fire testing. Figure 4 shows a sample of Comparative Example 3 after fire testing. Figure 5 shows a sample of Comparative Example 4 after fire testing. Figure 6 shows a sample of Example 2 after fire testing. As can be shown from Figures 1-6, Comparative Examples 1 and 3 show significant cracking, shrinkage and visual fire damage, unlike Examples 1 and 2. Examples 1 and 2 also show reduced cracking relative to Comparative Examples 2 and 4 respectively. In this way, Examples 1 and 2 show improved cracking resistance over Comparative Examples 1, 2, 3 and 4.
Overall, the fire performance of Example 1 is improved compared to comparative Examples 1 and 2, due to the large reduction in cracking outweighing the reduction in insulation time.
Overall, the fire performance of Example 2 is significantly improved compared to Comparative Examples 3 and 4, due to the improvement in the cracking and improvement in the insulation time.

**Claims**

1. A wet ready mix, said wet ready mix comprising a mineral filler, a binder,

   water, and stone wool objects;
   said stone wool objects are objects wherein the total amount of $Na_2O$, $K_2O$, CaO, MgO and, BaO is greater than or equal to 18 wt.%, said stone wool objects comprising stone wool fibres, wherein a portion of said stone wool fibres have a longest dimension greater than $250\mu m$; and said mineral filler comprising a metal carbonate,
   **characterised in that**
   said wet ready mix comprises said mineral filler in an amount of 35 to 75 wt.% relative to the weight of said wet ready mix;
   said wet ready mix comprises said binder in an amount of 7 to 12 wt.% relative to the total weight of said wet ready mix; and
   said wet ready mix comprises water in an amount of 25 to 40 wt.% relative to the total weight of said wet ready mix.

2. The wet ready mix of claim 1, wherein said stone wool objects comprise at least one of silicon dioxide, aluminium oxide and magnesium oxide.

3. The wet ready mix of claim 1 or claim 2, wherein said stone wool objects comprise silicon dioxide and aluminium oxide, wherein said stone wool objects comprise more silicon dioxide than aluminium oxide by weight.

4. The wet ready mix of any one preceding claim, wherein said stone wool objects are present in an amount of at least 0.2 wt.% relative to the total weight of said wet ready mix.

5. The wet ready mix of any one preceding claim, wherein said stone wool objects are present in an amount of up to 5 wt.% relative to the total weight of said wet ready mix.

6. The wet ready mix of any one preceding claim, wherein said wet ready mix is free of vermiculite.

7. The wet ready mix of any one preceding claim, wherein at least 0.8% by number of said stone wool fibres have a longest dimension greater than 250μm, preferably wherein at least 2% by number of said stone wool fibres have a longest dimension greater than 250μm.

8. The wet ready mix of any one preceding claim, wherein at least 30% by number of said stone wool objects are spherical particles, preferably wherein at least 40% by number of said stone wool objects are spherical particles.

9. The wet ready mix of any one preceding claim, wherein at least 5% by number of said stone wool objects are fibres, preferably wherein at least 20% by number of said stone wool objects are fibres.

10. The wet ready mix of any one preceding claim, wherein at least 5% by number of said stone wool objects are crossed fibres which are objects with a diameter smaller than 0.3 times the object length and a straightness coefficient (S) less than 0.9, wherein the S is measured as defined in the description, preferably wherein at least 15% by number of said stone wool objects are crossed fibres.

11. The wet ready mix of any one preceding claim, wherein said mineral filler comprises $CaCO_3$ and/or $CaMg(CO_3)_2$.

12. A cementitious product comprising a coating layer, the coating layer formed from a wet ready mix according to claim 1.

**Patentansprüche**

1. Eine nasse Fertigmischung, wobei die nasse Fertigmischung einen mineralischen Füllstoff, ein Bindemittel, Wasser und Steinwolleobjekte beinhaltet;

    wobei die Steinwolleobjekte Objekte sind, wobei die Gesamtmenge an $Na_2O$, $K_2O$, CaO, MgO und BaO größer als oder gleich 18 Gew.-% ist, wobei die Steinwolleobjekte Steinwollefasern beinhalten, wobei ein Anteil der Steinwollefasern eine längste Abmessung von größer als 250 μm aufweist; und wobei der mineralische Füllstoff ein Metallcarbonat beinhaltet,
    **dadurch gekennzeichnet, dass**
    die nasse Fertigmischung den mineralischen Füllstoff in einer Menge von 35 bis 75 Gew.-%, bezogen auf das Gewicht der nassen Fertigmischung, beinhaltet;
    die nasse Fertigmischung das Bindemittel in einer Menge von 7 bis 12 Gew.-%, bezogen auf das Gesamtgewicht der nassen Fertigmischung, beinhaltet; und
    die nasse Fertigmischung Wasser in einer Menge von 25 bis 40 Gew.-%, bezogen auf das Gesamtgewicht der nassen Fertigmischung, beinhaltet.

2. Nasse Fertigmischung gemäß Anspruch 1, wobei die Steinwolleobjekte mindestens eines von Siliciumdioxid, Aluminiumoxid und Magnesiumoxid beinhalten.

3. Nasse Fertigmischung gemäß Anspruch 1 oder Anspruch 2, wobei die Steinwolleobjekte Siliciumdioxid und Aluminiumoxid beinhalten, wobei die Steinwolleobjekte mehr Siliciumdioxid als Aluminiumoxid, bezogen auf das Gewicht, beinhalten.

4. Nasse Fertigmischung gemäß einem der vorhergehenden Ansprüche, wobei die Steinwolleobjekte in einer Menge von mindestens 0,2 Gew.-%, bezogen auf das Gesamtgewicht der nassen Fertigmischung, vorhanden sind.

5. Nasse Fertigmischung gemäß einem der vorhergehenden Ansprüche, wobei die Steinwolleobjekte in einer Menge von bis zu 5 Gew.-%, bezogen auf das Gesamtgewicht der nassen Fertigmischung, vorhanden sind.

6. Nasse Fertigmischung gemäß einem der vorhergehenden Ansprüche, wobei die nasse Fertigmischung frei von Vermiculit ist.

7. Nasse Fertigmischung gemäß einem der vorhergehenden Ansprüche, wobei mindestens 0,8 % nach Anzahl der Steinwollefasern eine längste Abmessung von größer als 250 μm aufweisen, wobei vorzugsweise mindestens 2 % nach Anzahl der Steinwollefasern eine längste Abmessung von größer als 250 μm aufweisen.

8. Nasse Fertigmischung gemäß einem der vorhergehenden Ansprüche, wobei mindestens 30 % nach Anzahl der Steinwolleobjekte kugelförmige Partikel sind, wobei vorzugsweise mindestens 40 % nach Anzahl der Steinwolleobjekte kugelförmige Partikel sind.

9. Nasse Fertigmischung gemäß einem der vorhergehenden Ansprüche, wobei mindestens 5 % nach Anzahl der Steinwolleobjekte Fasern sind, wobei vorzugsweise mindestens 20 % nach Anzahl der Steinwolleobjekte Fasern sind.

10. Nasse Fertigmischung gemäß einem der vorhergehenden Ansprüche, wobei mindestens 5 % nach Anzahl der Steinwolleobjekte gekreuzte Fasern sind, die Objekte mit einem Durchmesser kleiner als das 0,3-fache der Objektlänge und einem Geradlinigkeitskoeffizienten (S) kleiner als 0,9 sind, wobei das S wie in der Beschreibung definiert gemessen wird, wobei vorzugsweise mindestens 15 % nach Anzahl der Steinwolleobjekte gekreuzte Fasern sind.

11. Nasse Fertigmischung gemäß einem der vorhergehenden Ansprüche, wobei der mineralische Füllstoff $CaCO_3$ und/oder $CaMg(CO_3)_2$ beinhaltet.

12. Ein zementöses Produkt, das eine Beschichtungsschicht beinhaltet, wobei die Beschichtungsschicht aus einer nassen Fertigmischung gemäß Anspruch 1 gebildet ist.


**Revendications**

1. Un mélange mouillé prêt à l'emploi, ledit mélange mouillé prêt à l'emploi comprenant une charge minérale, un liant, de l'eau, et des objets en laine de roche ;

   lesdits objets en laine de roche sont des objets où la quantité totale de $Na_2O$, $K_2O$, $CaO$, $MgO$ et $BaO$ est supérieure ou égale à 18 % en poids, lesdits objets en laine de roche comprenant des fibres de laine de roche, où une portion desdites fibres de laine de roche ont une dimension la plus longue supérieure à 250 $\mu$m ; et ladite charge minérale comprenant un carbonate de métal,
   **caractérisé en ce que**
   ledit mélange mouillé prêt à l'emploi comprend ladite charge minérale en une quantité de 35 à 75 % en poids par rapport au poids dudit mélange mouillé prêt à l'emploi ;
   ledit mélange mouillé prêt à l'emploi comprend ledit liant en une quantité de 7 à 12 % en poids par rapport au poids total dudit mélange mouillé prêt à l'emploi ; et
   ledit mélange mouillé prêt à l'emploi comprend de l'eau en une quantité de 25 à 40 % en poids par rapport au poids total dudit mélange mouillé prêt à l'emploi.

2. Le mélange mouillé prêt à l'emploi de la revendication 1, où lesdits objets en laine de roche comprennent au moins un élément parmi le dioxyde de silicium, l'oxyde d'aluminium et l'oxyde de magnésium.

3. Le mélange mouillé prêt à l'emploi de la revendication 1 ou de la revendication 2, où lesdits objets en laine de roche comprennent du dioxyde de silicium et de l'oxyde d'aluminium, où lesdits objets en laine de roche comprennent plus de dioxyde de silicium que d'oxyde d'aluminium en poids.

4. Le mélange mouillé prêt à l'emploi de n'importe quelle revendication précédente, où lesdits objets en laine de roche sont présents en une quantité d'au moins 0,2 % en poids par rapport au poids total dudit mélange mouillé prêt à l'emploi.

5. Le mélange mouillé prêt à l'emploi de n'importe quelle revendication précédente, où lesdits objets en laine de roche sont présents en une quantité allant jusqu'à 5 % en poids par rapport au poids total dudit mélange mouillé prêt à l'emploi.

6. Le mélange mouillé prêt à l'emploi de n'importe quelle revendication précédente, où ledit mélange mouillé prêt à l'emploi est exempt de vermiculite.

7. Le mélange mouillé prêt à l'emploi de n'importe quelle revendication précédente, où au moins 0,8 % en nombre desdites fibres de laine de roche ont une dimension la plus longue supérieure à 250 $\mu$m, de préférence où au moins 2 % en nombre desdites fibres de laine de roche ont une dimension la plus longue supérieure à 250 $\mu$m.

8. Le mélange mouillé prêt à l'emploi de n'importe quelle revendication précédente, où au moins 30 % en nombre desdits objets en laine de roche sont des particules sphériques, de préférence où au moins 40 % en nombre desdits objets en laine de roche sont des particules sphériques.

9. Le mélange mouillé prêt à l'emploi de n'importe quelle revendication précédente, où au moins 5 % en nombre desdits objets en laine de roche sont des fibres, de préférence où au moins 20 % en nombre desdits objets en laine de roche sont des fibres.

10. Le mélange mouillé prêt à l'emploi de n'importe quelle revendication précédente, où au moins 5 % en nombre desdits objets en laine de roche sont des fibres croisées qui sont des objets avec un diamètre inférieur à 0,3 fois la longueur d'objet et un coefficient de rectitude (S) inférieur à 0,9, où le S est mesuré tel que défini dans la description, de préférence où au moins 15 % en nombre desdits objets en laine de roche sont des fibres croisées.

11. Le mélange mouillé prêt à l'emploi de n'importe quelle revendication précédente, où ladite charge minérale comprend du $CaCO_3$ et/ou du $CaMg(CO_3)_2$.

12. Un produit cimentaire comprenant une couche de revêtement, la couche de revêtement étant formée à partir d'un mélange mouillé prêt à l'emploi selon la revendication 1.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 122726987 A